# EUROPÄISCHE PATENTSCHRIFT

(11) **EP 1 304 290 B1**
(45) Veröffentlichungstag und Bekanntmachung des Hinweises auf die Patenterteilung: **30.03.2005**
(21) Anmeldenummer: 02090314.2
(22) Anmeldetag: 04.09.2002
(51) Int. Cl.: B63G 8/28

(54) **System und Verfahren zur Erkennung und Abwehr von Laserbedrohungen und Unterwasserobjekten für Unterwasserfahrzeuge**
System and process for the defense and the detection of the laser threats and of the underwater objects for submarines
Système et procédé de défense et de détection des menaces par laser et des objets sous-marins pour des sous-marins

(30) Priorität: 18.10.2001 DE 10151597
(43) Veröffentlichungstag der Anmeldung: 23.04.2003
(73) Patentinhaber: HOWALDTSWERKE-DEUTSCHE WERFT AG, 24143 Kiel (DE)
(72) Erfinder: Heizmann-Bartels, Gebhard, 24113 Molfsee (DE)
(74) Vertreter: Köckeritz, Günter

(56) Entgegenhaltungen:
- EP-A- 0 811 853
- DE-C- 19 604 745
- GB-A- 2 221 634
- US-A- 5 268 875
- US-A- 5 767 954
- FAS: "Submarine Tactical Warfare Systems" FEDERATION AMERICAN SCIENTISTS, [Online] XP002227405 Gefunden im Internet: <URL:http://www.fas.org/irp/budget/fy98_na vy/0603562n.htm> [gefunden am 2003-01-14]

## Beschreibung

Die Erfindung betrifft ein Unterwasserfahrzeug mit einem System und ein Verfahren für Unterwasserfahrzeuge zur Erkennung bzw. Abwehr von Laserbedrohungen einschließlich der Unterwasserobjekterkennung mit Hilfe von Laserdetektoren und den dazu gehörigen in einem Unterwasserfahrzeug zu plazierenden Einrichtungen für einen ausreichenden Rundumschutz von Unterwasserfahrzeugen in Elevation und Azimut.

Laserbedrohungen werden durch Laser die von anderen Plattformen zur Erkennung/Entdeckung eines Unterwasserfahrzeuges eingesetzt werden oder durch lasergesteuerte Waffen wie z.B. Torpedos definiert.
Die Nutzung von Lasern zur Unterwasserobjekterkennung ansich ist bereits bekannt.
Stand der Technik ist, dass eine Bedrohung für U-Boote durch andere Plattformen, die mit aktiven Lasermeß- und ortungssystemen ausgerüstet sind, existiert.
Im Bereich der fliegenden Aufklärung setzen fliegende Plattformen zunehmend Lasermeßeinrichtungen ein, die in der Lage sind, getaucht operierende U-Boote zu detektieren und zu orten (z.B. das System "April Showers" der Firma Kaman Aerospace USA).
Im Unterwasserbereich ist davon auszugehen, dass gegnerische U-Boote, Torpedos sowie Unmanned Underwater Vehicles mit Lasern ausgerüstet werden. U-Boote herkömmlicher Bauart können derzeit jedoch keine Laserbestrahlung detektieren.

Weiterhin sind U-Boote herkömmlicher Bauart z.Z. nicht mit einem bordeigenem Lasersystem zur Detektion von anderen Unterwasserobjekten sowie zur Unterstützung der Abwehr derselben ausgerüstet.
Ein Schutz von U-Booten gegen Laserbedrohung besteht deshalb nicht.
U-Boote herkömmlicher Bauart verfügen auch nicht über Laserwarneinrichtungen gegen Unterwasserlaser sowie gegen Laserbestrahlung durch Überwasserschiffe und durch fliegende Aufklärungsplattformen (Maritime Patrol Aircrafts, Hubschrauber etc.).
U-Boote der herkömmlichen Bauart sind zur Abwehr von angreifenden Torpedos lediglich mit akustischen Tam-, Stör- und Täuschkörpem ausgerüstet. Ein Schutz von U-Booten gegen Laserbedrohung und lasergelenkte Waffen besteht nicht. Akustische Gegenmaßnahmen sind gegen lasergelenkte Waffen wirkungslos.

Aufgabe der Erfindung ist es, ein. Unterwasserfahrzeug mit einen System und ein Verfahren für einen ausreichenden Rundumschutz von Unterwasserfahrzeugen in Elevation und Azimut durch Erfassen von Laserbestrahlung aus der Luft (Medienübergang) und im Wasser (gleiches Medium) zu schaffen, welches gleichzeitig geeignet ist aktive Gegenmaßnahmen gegen derartigen Bedrohungen zu veranlassen und aktiv eine Detektion von anderen Unterwasserobjekten zu ermöglichen.
Erfindungsgemäß wird diese Aufgabe durch die Merkmale der Ansprüche 1 und 8 gelöst. Besonders vorteilhafte Ausgestaltungen der Erfindung sind den jeweils zugehörigen Ansprüchen 2 bis 7 bzw. 9 bis 15 zu entnehmen.
Die Gefahr der Fremddetektion der U-Boote durch Laserbestrahlung wird dadurch verringert.

Nach einem bevorzugten Merkmal sind auf der Oberfläche des Fahrzeuges Mittel zur Detektion von Lasern und Mittel zur Objektdetektion und Abwehr angeordnet, wobei die Mittel zur Detektion von Lasern über einen Laser-Warn-Empfänger und Signal Prozessor miteinander verbunden sind. Die Mittel zur Objektdetektion und Abwehr sind über einen Laser-Control-Prozessor miteinander verbunden und über diesen steuerbar. Der Laser-Control-Prozessor steht dabeidirekt mit einer Waffenleitanlage und dem Laser -Warn-Empfänger und Signal Prozessor in Verbindung. Dadurch wird sichergestellt, dass die Detektion anderer Unterwasserobjekte und die Abwehr derer mittels Laserwarnung und Einsatz bordeigener Laser erfolgen kann.

Nach einem weiteren Merkmal sind die Mittel zur Detektion von Lasern auf die Erkennung von Laserdedrohungen ausgelegte druckfeste Laserdetektorsensoren. Die Mittel zur Detektion von Lasern sind auf der Oberfläche des Fahrzeuges derart angeordnet, dass eine räumliche Rundumabdeckung des Fahrzeuges (UB) in Elevation und Azimut durch Überlappung der Auffassungsbereiche der einzelnen Mittel erfolgt.
Der Laser -Warn-Empfänger und Signal Prozessor enthält Mittel zum Empfang, zur Auswertung und zur Analyse der empfangenen Lasersignale und zur Klassifizierung gegen eine Datenbank.
Die Waffenleitanlage enthält Mittel zur Auswertung und zur Analyse der empfangenen Signale und zur Klassifizierung gegen eine Datenbank.
Die Mittel zur Objektdetektion und Abwehr sind im Scan Modus arbeitende druckfeste Laser.
Die Mittel zur Objektdetektion sind von den Mitteln der Objektabwehr auf der Oberfläche des Fahrzeuges nach einem besonderen Merkmal der Erfindung getrennt voneinander angeordnet, wobei die über die Oberfläche des Fahrzeuges verteilten Laser für die Objektdetektion in Elevation und Azimut und die über die Oberfläche des Fahrzeuges verteilte Abwehrlaser für die Objektbekämpfung in Elevation und Azimut zuständig sind. Die Waffenleitanlage steht dabei über ein Torpedo Counter Measure System mit Torpedoabwehrkörpern in Verbindung.

Die Erfindung umfasst weiterhin ein Verfahren zur Erkennung und Abwehr von Laserbedrohungen und Unterwasserobjekten für Unterwasserfahrzeuge.
Danach erfolgt durch auf der Oberfläche des Fahrzeuges angeordnete Mittel zur Detektion von Lasern eine räumliche Rundumabdeckung des Fahrzeuges in Elevation und Azimut durch Überlappung der Auffassungsbereiche der einzelnen Mittel, wobei die von diesen Mitteln detektierten Lasersignale an einen Laser Wam-Empfänger und Signal Prozessor geleitet werden, über alle Mittel miteinander verbunden sind. Die Mittel tasten den Umgebungsraum des Fahrzeuges hinsichtlich zu detektierenden Objekte dabei im Scan Modus ab. Über den Laser -Warn-Empfänger und Signal Prozessor erfolgt der Empfang, die Auswertung und die Analyse der Lasersignale sowie die Klassifizierung gegen eine Datenbank, in deren Ergebnis ein Datentelegramm als Laserwarnung und Laseralarm mit lokaler Positionsbestimmung ausgegeben wird. Das Datentelegramm der Laserwarnung und des Laseralarms wird an eine Waffenleitanlage übermittelt, die in die Lage versetzt wird Gegenreaktionen einzuleiten.
Nach einem weiteren Merkmal erfolgt durch auf der Oberfläche des Fahrzeuges angeordnete Mittel zur Objektdetektion und Abwehr eine weitere räumliche Rundumabdeckung des Fahrzeuges in Elevation und Azimut, wobei die Mittel über einen Laser-Control-Prozessor miteinander verbunden sind und über diesen gesteuert werden und den Umgebungsraum des Fahrzeuges hinsichtlich zu detektierenden Objekte vertikal und horizontal abtasten. Die von diesen Mitteln detektierten Signale werden an den Laser-Wam-Empfänger und Signal Prozessor geleitet.
Über den Laser -Warn-Empfänger und Signal Prozessor erfolgen der Empfang, die Auswertung und die Analyse der Signale sowie die Klassifizierung gegen eine Datenbank, in deren Ergebnis ein Datentelegramm als Objektalarm mit lokaler Positionsbestimmung ausgegeben wird. Das Datentelegramm des Objektalarms wird an die Waffenleitanlage übermittelt, die in die Lage versetzt wird Gegenreaktionen einzuleiten.
Der Laser -Warn-Empfänger und Signal Prozessor enthält Mittel zum Empfang, zur Auswertung und zur Analyse der empfangenen Lasersignale und zur Klassifizierung gegen eine Datenbank. Bedingt durch Empfangsverhältnisse vom Laser -Warn-Empfänger und Signal Prozessor werden ausgegebene Degradationen der Ergebnisse zumindest in Form eines Datentelegramms als Laserwarnung ausgegeben.

Die Auswertung und Analyse der Signale und die Klassifizierung gegen eine Datenbank erfolgt über die Waffenleitanlage. Über die Waffenleitanlage werden manuelle und/oder automatische Gegenreaktionen über ein bordeigenen aktives Lasersystem und/oder über Torpedoabwehrkörper eines Torpedo Counter Measure Systems eingeleitet. Eine Übergabe der Datentelegramme Laserwarnung / Laseralarm erfolgt dabei vom Laser Warn Empfänger und Signal Prozessor an den Laser Control Prozessor.
Mit der Erfindung wird erreicht, ein auf die Laserbedrohung ausgelegtes, geeignetes Laserwarn- und aktives Lasersystem über das U-Boot derart verteilt anzuordnen, dass ein räumlicher Rundumschutz geschaffen wird. Das System alarmiert und warnt die Besatzung. Es versetzt die Waffenleitanlage des U-Boots in die Lage, eine manuell gesteuerte und/oder automatische Gegenreaktion über ein ggf. vorhandenes Torpedo Countermeasure System einzuleiten. Durch die hohe Präzision der ermittelten Bedrohungsdaten kann z.B. eine gezielte Hardkill-Reaktion gegen angreifende Torpedos stattfinden, die heutzutage aufgrund der unzulänglichen akustischen Informationen nicht möglich ist. Die Detektion von anderen Unterwasserobjekten ist bisher nur durch die Verwendung von akustischen aktiv oder passiv arbeitenden Sende-/Empfangsanlagen (Sonaranlagen) möglich. Durch die Rundumabdeckung in Elevation und Azimut durch Laser wird gegenüber stationären (z.B. Minen) und dynamischen Objekten (z.B. gegnerische U-Boote, Unmanned Underwater Vehicles, superkavitierende Objekte etc.) ein zusätzliche Schutzmöglichkeit geschaffen.

Die Erfindung wird anhand der Zeichnungen näher erläutert.

Es zeigen:

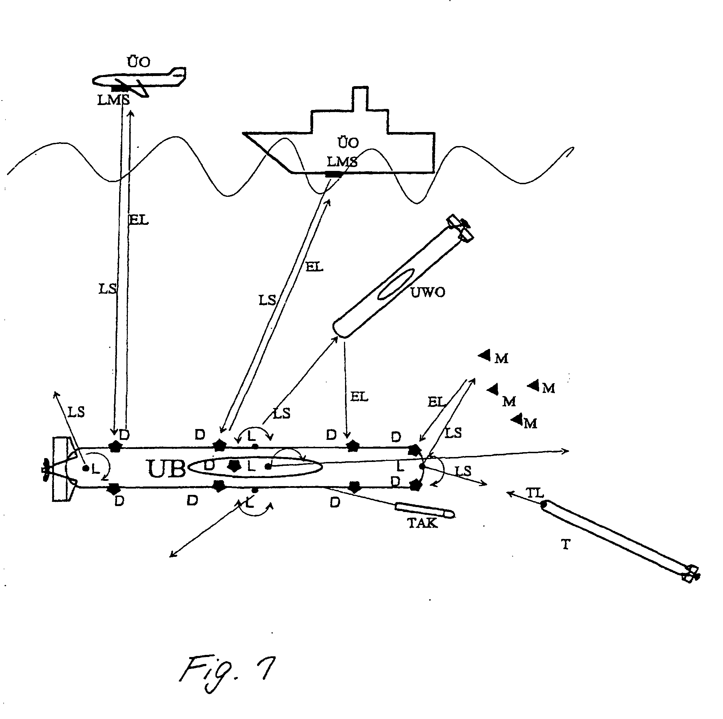

- Figur 1:: : Anordnung U-Boot Laser und Laserwarner System in einem typische Einsatzszenario,

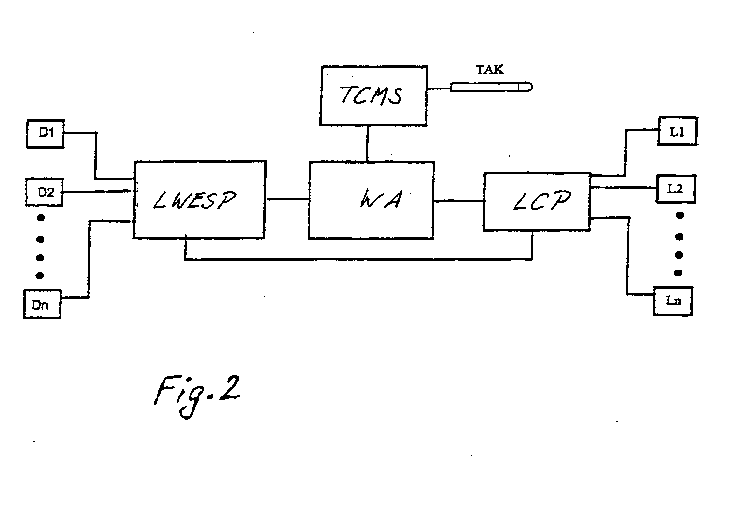

- Figur 2:: Systemblockbild U-Boot Laser und Laserwarner System,

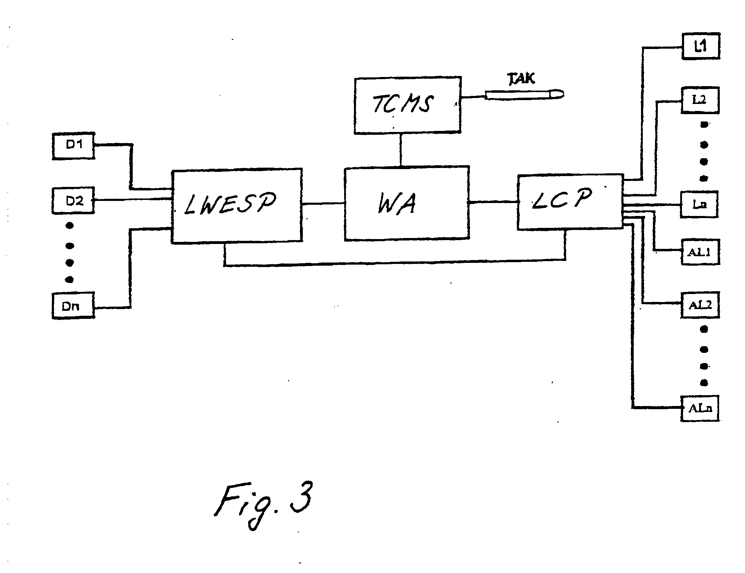

- Figur 3:: Alternatives Systemblockbild U-Boot Laser und Laserwarnsystem.

Über die Oberfläche des U-Boots (UB) werden auf die Laserbedrohung ausgelegte, geeignete druckfeste Laserdetektorsensoren (D) verteilt angeordnet. Die Verteilung ist derart, dass eine räumliche Rundumabdeckung in Elevation und Azimut durch Überlappung der Auffassungsbereiche der Einzelsensoren geschaffen wird. Die einzelnen Laserdetektorsensoren sind über Laser Warn Empfänger und Signal Prozessor (LWESP) miteinander verbunden. Der Laser Warn Empfänger und Signal Prozessor beinhaltet die notwendigen Empfangs- und Prozessorkarten, die den Empfang, die Auswertung, Analyse des empfangenen Lasersignals und Klassifizierung gegen eine Datenbank ermöglichen. Als Ergebnis des Signalverarbeitungsprozesses wird die Analyse und Klassifikation des Lasersignals in Form eines Datentelegramms als Laseralarm inklusive der räumlichen Positionsbestimmung ausgegeben. Degradationen der ausgegebenen Ergebnisse, bedingt durch die Empfangsverhältnisse oder andere Einflüsse, werden zumindest in Form eines Datentelegramms als Laserwarnung ausgegeben.
Die minimale Auslegung für die Funktion Laserwarnung sieht die Anordnung nur eines Laserwarndetektors vor, der dann aber nur eine räumlich eingeschränkte Abdeckung ermöglicht.

Das Datentelegramm des Laseralarms bzw. der Laserwarnung wird an die Waffenleitanlage des U-Boot's über eine geeignete Schnittstelle übermittelt. Denkbar ist auch, dass die Waffenleitanlage selbst ein Prozessormodul enthält, dass die Analyse und Klassifikation inklusive des notwendigen Datenbankvergleiches durchführt. Die Waffenleitanlage wird in die Lage versetzt, eine manuelle und/oder automatische Gegenreaktion über das bordeigene aktive Lasersystem und/oder die Torpedoabwehrkörper (TAK) des Torpedo Counter Measure Systems (TCMS), falls vorhanden, einzuleiten.
Die minimale Auslegung für die Funktion Laserwarnung sieht eine Insellösung des Laser Warn Empfänger und Signal Prozessors vor, der über einen eigenen Bildschirmarbeitsplatz (ggf. Laptop o.ä.) bedient wird.

Über die Oberfläche des U-Boots werden auf die Aufgaben der Objektdetektion (von U-Boote, Minen, etc.) und Abwehr (z.B. lasergelenkte Torpedos) ausgelegte, geeignete druckfeste Laser (L) verteilt angeordnet. Die Verteilung ist derart, dass eine räumliche Rundumabdeckung in Elevation und Azimut der im Scan Modus arbeitenden Laser geschaffen wird.
Die minimale Systemauslegung sieht die Anordnung nur eines einzelnen Lasers vor, der dann aber nur eine räumlich eingeschränkte Abdeckung ermöglicht.

Die einzelnen Laser werden über Laser Control Prozessor (LCP) gesteuert und tasten den Umgebungsraum vertikal und horizontal ab. Dabei werden ggf. Abtastverfahren, z.B. Conical Scan oder andere, wie z.B. in der Radartechnik gebräuchliche Abtastverfahren, eingesetzt. Der Laser Control Prozessor ist mit der Waffenleitanlage und dem Laser Warn Empfänger und Signal Prozessor direkt verbunden. Aus Gründen der Redundanz ist eine Informationsübergabe der Datentelegramme Laserwarnung und Laseralarm vom Laser Warn Empfänger und Signal Processor an den Laser Control Prozessor notwendig.

Durch die hohe Präzision der mittels Laser Warn Empfänger und Signal Prozessor ermittelten Bedrohungsdaten findet eine gezielte Laserbestrahlung angreifender gegnerischer lasergelenkter Unterasserobjekte (z.B. Torpodo (T)) mit dem Ziel der Tarnung, Täuschung und/oder Blendung/Zerstörung statt. Unter Blendung wird das Blenden der Torpedo Lasersensorik durch ein U - Boot - Laser verstanden.Dadurch wird die Empfangsoptronik der Torpedo Lasersensorik zeitlich begrenzt oder unbegrenzt "blind". Die Funktion Eigenlenkung des Torpedos durch seinen Laser wird somit eliminiert. Unter Zerstörung wird das Zerstören der empfindlichen Empfangsoptronik der Torpedo Lasersensorik durch den U - Boot Laser verstanden. Das geht über das Blenden hinaus, hat aber das gleiche Resultat auf die Funktion Eigenlenkung, wie bei der Blendung. Als alternative Lösung ist die Trennung von Lasern zur Objektdetektion und Lasern zur Objektbekämpfung vorgesehen. In diesem Anwendungsfall werden zusätzliche Abwehrlaser (AL) derart über das Fahrzeug verteilt, dass eine rundum Abdeckung in Elevation und Azimut gegeben ist. Als Minimalkonfiguration ist der Einsatz eines Abwehrlasers (AL) anzusehen.

### Liste der verwendeten Bezugszeichen

- UB: U- Boot
- ÜO: Überwasserobjekt
- UWO: Unterwasserobjekt
- T: Torpedo
- TL: Torpedolaser
- M: Mine
- D: Laserdetektorsensor
- L: Laser
- EL: Echo des Laserstrahls
- LS: Laserstrahl
- TAK: Torpedoabwehrkörper
- LMS: Lasermeßsystem
- AL: Abwehrlaser
- LCP: Laser-Control-Prozessor
- WA: Waffenleitanlage
- LWESP: Laser-Warn-Empfänger und Signal Prozessor
- TCMS: Torpedo Counter Measure System

## Patentansprüche

1. Unterwasserfahrzeug mit einem System zur Erkennung und Abwehr von Laserbedrohungen und Unterwasserobjekten, wobei auf der Oberfläche des Fahrzeuges (UB) Mittel zur Detektion von Lasern (D) angeordnet sind und die Mittel (D) über einen Laser-Warn-Empfänger und Signal Prozessor (LWESP) miteinander verbunden und über diesen steuerbar sind, wobei die Mittel zur Detektion von Lasern (D) auf die Erkennung von Laserdedrohungen ausgelegte druckfeste Laserdetektorsensoren sind, und der Laser Warn-Empfänger und Signal Prozessor (LWESP) Mittel zum Empfang, zur Auswertung und zur Analyse der empfangenen Lasersignale und zur Klassifizierung gegen eine Datenbank enthält.

2. Unterwasserfahrzeug nach Anspruch 1, **dadurch gekennzeichnet, dass** auf der Oberfläche des Fahrzeuges (UB) Mittel zur Detektion von Lasern (D) und Mittel zur Objektdetektion und Abwehr (L), angeordnet sind, wobei die Mittel zur Detektion von Lasern (D) über einen Laser -Warn-Empfänger und Signal Prozessor (LWESP) miteinander verbunden sind, und die Mittel zur Objektdetektion und Abwehr (L) über einen Laser-Control-Prozessor (LCP) miteinander verbunden und über diesen steuerbar sind, wobei der Laser-Control-Prozessor (LCP) direkt mit einer Waffenleitanlage (WA) und dem Laser -Warn-Empfänger und Signal Prozessor (LWESP) in Verbindung steht, wobei die Waffenleitanlage (WA) Mittel zur Auswertung und zur Analyse der empfangenen Signale und zur Klassifizierung gegen eine Datenbank enthält und über ein Torpedo Counter Measure System (TCMS) mit Torpedoabwehrkörpem (TAK) in Verbindung steht.

3. Unterwasserfahrzeug nach einem der o.g. Ansprüche, **dadurch gekennzeichnet, dass** die Mittel zur Detektion von Lasern (D) auf die Erkennung von Laserdedrohungen ausgelegte druckfeste Laserdetektorsensoren sind.

4. Unterwasserfahrzeug nach einem der o.g. Ansprüche, **dadurch gekennzeichnet, dass** die Mittel zur Detektion von Lasern (D) auf der Oberfläche des Fahrzeuges (UB) derart angeordnet sind, dass eine räumliche Rundumabdeckung des Fahrzeuges (UB) in Elevation und Azimut durch Überlappung der Auffassungsbereiche der einzelnen Mittel (D) erfolgt.

5. Unterwasserfahrzeug nach einem der o.g. Ansprüche, **dadurch gekennzeichnet, dass** der Laser-Warn-Empfänger und Signal Prozessor (LWESP) Mittel zum Empfang, zur Auswertung und zur Analyse der empfangenen Lasersignale und zur Klassifizierung gegen eine Datenbank enthält.

6. Unterwasserfahrzeug nach einem der o.g. Ansprüche, **dadurch gekennzeichnet, dass** die Mittel zur Objektdetektion und Abwehr (L) im Scan Modus arbeitende druckfeste Laser sind.

7. Unterwasserfahrzeug nach einem der o.g. Ansprüche, **dadurch gekennzeichnet, dass** die Mittel zur Objektdetektion von den Mitteln der Objektabwehr auf der Oberfläche des Fahrzeuges (UB) voneinander getrennt angeordnet sind, wobei die über die Oberfläche des Fahrzeuges (UB) verteilten Laser (L) für die Objektdetektion in Elevation und Azimut und die über die Oberfläche des Fahrzeuges (UB) verteilte Abwehrlaser (AL) für die Objektbekämpfung in Elevation und Azimut zuständig sind.

8. Verfahren zur Erkennung und Abwehr von Laserbedrohungen und Unterwasserobjekten für Unterwasserfahrzeuge, wobei durch auf der Oberfläche des Fahrzeuges (UB) angeordnete Mittel zur Detektion von Lasern (D) eine räumliche Rundumabdeckung des Fahrzeuges (UB) in Elevation und Azimut durch Überlappung der Auffassungsbereiche der einzelnen Mittel (D) erfolgt,
wobei die von den Mitteln (D) detektierten Lasersignale an einen Laser-Warn-Empfänger und Signal Prozessor (LWESP) geleitet werden, über den alle Mittel (D) miteinander verbunden sind,
über den Laser -Warn-Empfänger und Signal Prozessor (LWESP) der Empfang, die Auswertung und die Analyse der Lasersignale sowie die Klassifizierung gegen eine Datenbank erfolgt, in deren Ergebnis ein Datentelegramm als Laserwarnung und Laseralarm mit lokaler Positionsbestimmung ausgegeben wird,
das Datentelegramm der Laserwamung und des Laseralarms an eine Waffenleitanlage (WA) übermittelt wird, die in die Lage versetzt wird Gegenreaktionen einzuleiten.

9. Verfahren nach Anspruch 8, **dadurch gekennzeichnet, dass**
weiterhin durch auf der Oberfläche des Fahrzeuges (UB) angeordnete Mittel (L, AL) zur Objektdetektion und Abwehr eine räumliche Rundumabdeckung des Fahrzeuges (UB) in Elevation und Azimut erfolgt,
wobei die Mittel (L, AL) über einen über einen Laser-Control-Prozessor (LCP) miteinander verbunden sind und über diesen gesteuert werden und den Umgebungsraum des Fahrzeuges (UB) hinsichtlich zu detektierenden Objekte vertikal und horizontal abtasten,
wobei die von den Mitteln (L, AL) detektierten Signale an den Laser -Warn-Empfänger und Signal Prozessor (LWESP) geleitet werden,
über den Laser -Warn-Empfänger und Signal Prozessor (LWESP) der Empfang, die Auswertung und die Analyse der Signale sowie die Klassifizierung gegen eine Datenbank erfolgen, in deren Ergebnis ein Datentelegramm als Objektalarm mit lokaler Positionsbestimmung ausgegeben wird,
das Datentelegramm des Objektalarms an die Waffenleitanlage (WA) übermittelt wird, die in die Lage versetzt wird, Gegenreaktionen einzuleiten.

10. Verfahren nach einem der o.g. Ansprüche, **dadurch gekennzeichnet, dass** der Laser -Warn-Empfänger und Signal Prozessor (LWESP) Mittel zum Empfang, zur Auswertung und zur Analyse der empfangenen Lasersignale und zur Klassifizierung gegen eine Datenbank enthält.

11. Verfahren nach einem der o.g. Ansprüche, **dadurch gekennzeichnet, dass** bedingt durch Empfangsverhältnisse vom Laser -Warn-Empfänger und Signal Prozessor (LWESP) ausgegebene Degradationen der Ergebnisse zumindest in Form eines Datentelegramms als Laserwarnung ausgegeben werden.

12. Verfahren nach einem der o.g. Ansprüche, **dadurch gekennzeichnet, dass** die Auswertung und Analyse der Signale und die Klassifizierung gegen eine Datenbank über die Waffenleitanlage (WA) erfolgt.

13. Verfahren nach einem der o.g. Ansprüche, **dadurch gekennzeichnet, dass** über die Waffenleitanlage (WA) manuelle und/oder automatische Gegenreaktionen über ein bordeigenen aktives Lasersystem und/oder über Torpedoabwehrkörper eines Torpedo Counter Measure Systems (TCMS) eingeleitet werden.

14. Verfahren nach einem der o.g. Ansprüche, **dadurch gekennzeichnet, dass** die Mittel (L) den Umgebungsraum des Fahrzeuges (UB) hinsichtlich zu detektierenden Objekte im Scan Modus abtasten,

15. Verfahren nach einem der o.g. Ansprüche, **dadurch gekennzeichnet, dass** eine Übergabe der Datentelegramme Laserwarnung / Laseralarm vom Laser Warn Empfänger und Signal Prozessor (LWESP) an den Laser Control Prozessor (LCP) erfolgt.

## Claims

1. Underwater vehicle having a system for detecting and repulsing laser threats and underwater objects, means for detecting lasers (D) being arranged on the surface of the vehicle (UB), and the means (D) being interconnected and controlled via a laser warning receiver and signal processor (LWESP), the means for detecting lasers (D) being laser detector sensors designed to detect laser threats, and the laser warning receiver and signal processor (LWESP) containing means for receiving, evaluating and analysing the received laser signals and for classifying them against a data bank.

2. Underwater vehicle according to claim 1,
**characterised in that** means for detecting lasers (D) and means for detecting and repulsing objects (L) are arranged on the surface of the vehicle (UB), the means for detecting lasers (D) being interconnected via a laser warning receiver and signal processor (LWESP), and the means for detecting and repulsing objects (L) being interconnected and controlled via a laser control processor (LCP), the laser control processor (LCP) being in direct communication with a weapon-guiding system (WA) and the laser warning receiver and signal processor (LWESP), the weapon-guiding system (WA) containing means for evaluating and analysing the received signals and for classifying them against a data bank, said system communicating with torpedo decoys (TAK) via a torpedo counter-measure system (TCMS).

3. Underwater vehicle according to one of the above-mentioned claims, c**haracterised in that** the means for detecting lasers (D) are pressure-resistant laser detector sensors designed to detect laser threats.

4. Underwater vehicle according to one of the above-mentioned claims, **characterised in that** the means for detecting lasers (D) are arranged on the surface of the vehicle (UB) in such a way that all-round spatial coverage of the vehicle (UB) in elevation and azimuth is provided by overlapping the acquisition ranges of the individual means (D).

5. Underwater vehicle according to one of the above-mentioned claims, **characterised in that** the laser warning receiver and signal processor (LWESP) has means for receiving, evaluating and analysing the received laser signals and for classifying them against a data bank.

6. Underwater vehicle according to one of the above-mentioned claims, **characterised in that** the means for detecting and repulsing objects (L) are pressure-resistant lasers operating in scan mode.

7. Underwater vehicle according to one of the above-mentioned claims, **characterised in that** the means for detecting objects are arranged on the surface of the vehicle (UB) separated from the means for repulsing objects, the lasers (L) distributed over the surface of the vehicle (UB) being responsible for detecting objects in elevation and azimuth, and the defence lasers (AL) distributed over the surface of the vehicle (UB) being responsible for combating objects in elevation and azimuth.

8. Method for recognising and repulsing laser threats and underwater objects for underwater vehicles, laser-detecting means (D), which are arranged on the surface of the vehicle (UB), providing spatial all-round coverage of the vehicle (UB) in elevation and azimuth by overlapping the acquisition ranges of the individual means (D),
the laser signals detected by the means (D) being passed to a laser warning receiver and signal processor (LWESP), via which all the means (D) are interconnected,
the reception, evaluation and analysis of the laser signals and the classification of same against a data bank taking place via the laser warning receiver and signal processor (LWESP), as a result of which a data telegram is issued as a laser warning and laser alert with local position determination,
the data telegram of the laser warning and the laser alert being transmitted to a weapon-guiding system (WA) which is enabled to initiate counter-reactions.

9. Method according to claim 8, **characterised in that** furthermore spatial all-round coverage of the vehicle (UB) in elevation and azimuth is provided by means (L, AL), arranged on the surface of the vehicle (UB), for detecting and repulsing objects, the means (L, AL) being interconnected and controlled via a laser control processor (LCP) and scanning vertically and horizontally the space surrounding the vehicle (UB) for objects to be detected,
the signals detected by the means (L, AL) being passed to the laser warning receiver and signal processor (LWESP),
the reception, evaluation and analysis of the signals and the classification of same against a data bank taking place via the laser warning receiver and signal processor (LWESP), as a result of which a data telegram is issued as an object alert with local position determination,
the data telegram of the object alert being transmitted to the weapon-guiding system (WA) which is enabled to initiate counter-reactions.

10. Method according to one of the above-mentioned claims, **characterised in that** the laser warning receiver and signal processor (LWESP) contains means for receiving, evaluating and analysing the received laser signals and for classifying them against a data bank.

11. Method according to one of the above-mentioned claims, **characterised in that** degradations of the results, caused by reception conditions of the laser warning receiver and signal processor (LWESP), are issued at least in the form of a data telegram as a laser warning.

12. Method according to one of the above-mentioned claims, **characterised in that** the evaluation and analysis of the signals and classification against a data bank is provided via the weapon-guiding system (WA).

13. Method according to one of the above-mentioned claims, **characterised in that** manual and/or automatic counter-reactions are initiated by the weapon-guiding system (WA) via an on-board active laser system and/or via torpedo decoys of a torpedo counter-measure system (TCMS).

14. Method according to one of the above-mentioned claims, **characterised in that** the means (L) scan the space surrounding the vehicle (UB) in scan mode for objects to be detected.

15. Method according to one of the above-mentioned claims, **characterised in that** the data telegrams laser warning/laser alert are transmitted from the laser warning receiver and signal processor (LWESP) to the laser control processor (LCP).

## Revendications

1. Véhicule sous-marin avec un système pour la détection et la défense de menaces par laser et d'objets sous-marins, des moyens pour la détection de lasers (D) étant placés sur la surface du véhicule (UB) et les moyens (D) étant raccordés les uns aux autres par l'intermédiaire d'un récepteur avertisseur par laser et processeur de signaux (LWESP) et pouvant être commandés par celui-ci, les moyens pour la détection de lasers (D) étant des capteurs à détecteurs par laser résistants à la pression, conçus pour la détection de menaces par laser et le récepteur avertisseur par laser et processeur de signaux (LWESP) comportant des moyens pour la réception, pour l'exploitation et pour l'analyse des signaux lasers reçus et pour la classification par rapport à une banque de données.

2. Véhicule sous-marin selon la revendication 1, **caractérisé en ce que** des moyens pour la détection de lasers (D) et des moyens pour la détection d'objets et pour la défense (L) sont placés sur la surface du véhicule (UB), les moyens pour la détection de lasers (D) étant raccordés les uns aux autres par l'intermédiaire d'un récepteur avertisseur par laser et processeur de signaux (LWESP), et les moyens pour la détection d'objets et pour la défense (L) étant raccordés les uns aux autres par un processeur de commande par laser (LCP) et pouvant être commandés par celui-ci, le processeur de commande par laser (LCP) communiquant directement avec une installation de guidage d'armes (WA) et avec le récepteur avertisseur par laser et processeur de signaux (LWESP), l'installation de guidage d'armes (WA) comprenant des moyens pour l'exploitation et pour l'analyse des signaux reçus et pour la classification par rapport à une banque de données et étant en communication avec un Torpedo Counter Measure System (TCMS) avec des corps de défense anti-torpilles (TAK).

3. Véhicule sous-marin selon l'une des revendications précédentes, **caractérisé en ce que** les moyens pour la détection de lasers (D) sont des capteurs à détecteurs par laser résistants à la pression, conçus pour la détection de menaces par laser.

4. Véhicule sous-marin selon l'une des revendications précédentes, **caractérisé en ce que** les moyens pour la détection de lasers (D) sont placés sur la surface du véhicule (UB) de telle manière qu'il en résulte une enveloppe circulaire spatiale du véhicule (UB) en élévation et azimutale par le chevauchement des zones de détection des différents moyens (D).

5. Véhicule sous-marin selon l'une des revendications précédentes, **caractérisé en ce que** le récepteur avertisseur par laser et processeur de signaux (LWESP) comprend des moyens pour la réception, pour l'exploitation et pour l'analyse des signaux lasers reçus et pour la classification par rapport à une banque de données.

6. Véhicule sous-marin selon l'une des revendications précédentes, **caractérisé en ce que** les moyens pour la détection d'objets et pour la défense (L) sont des lasers résistants à la pression qui fonctionnent en mode Scan.

7. Véhicule sous-marin selon l'une des revendications précédentes, **caractérisé en ce que** les moyens pour la détection d'objets sont placés séparément des moyens pour la défense d'objets sur la surface du véhicule (UB), les lasers (L) pour la détection d'objets répartis sur la surface du véhicule (UB) étant chargés de la détection d'objets en élévation et azimutale et les lasers de défense (AL) répartis sur la surface du véhicule (UB) étant chargés de la lutte contre les objets en élévation et azimutale.

8. Procédé pour la détection et la défense de menaces par laser et d'objets sous-marins pour des véhicules sous-marins, une enveloppe circulaire spatiale du véhicule (UB) en élévation et azimutale étant obtenu par le chevauchement des zones de détection des différents moyens (D) par l'intermédiaire de moyens pour la détection de lasers (D) placés sur la surface du véhicule (UB),
moyennant quoi les signaux lasers détectés par les moyens (D) sont transmis à un récepteur avertisseur par laser et processeur de signaux (LWESP) par l'intermédiaire duquel tous les moyens (D) sont raccordés les uns aux autres,
la réception, l'exploitation et l'analyse des signaux lasers ainsi que la classification par rapport à une banque de données, dans le résultat de laquelle un télégramme de données est émis comme avertissement par laser et alarme par laser avec détermination de position locale, se font par l'intermédiaire d'un récepteur avertisseur par laser et processeur de signaux (LWESP),
le télégramme de données de l'avertissement par laser et de l'alarme par laser est transmis à une installation de guidage d'armes (WA) qui est mise en position pour introduire des contre-réactions.

9. Procédé selon la revendication 8, **caractérisé en ce que**, en outre, grâce à des moyens (L, AL) pour la détection d'objets et pour la défense placés sur la surface du véhicule (UB), une enveloppe circulaire spatiale du véhicule (UB) en élévation et azimutale est obtenue,
moyennant quoi les moyens (L, AL) sont raccordés les uns aux autres par l'intermédiaire d'un processeur de commande par laser (LCP) et sont commandés par celui-ci et balaient l'espace environnant du véhicule (UB) verticalement et horizontalement par rapport aux objets à détecter,
moyennant quoi les signaux détectés par les moyens (L, AL) sont transmis au récepteur avertisseur par laser et processeur de signaux (LWESP),
la réception, l'exploitation et l'analyse des signaux ainsi que la classification par rapport à une banque de données, dans le résultat de laquelle un télégramme de données est émis comme alarme d'objet avec détermination de position locale, se font par l'intermédiaire d'un récepteur avertisseur par laser et processeur de signaux (LWESP),
le télégramme de données d'alarme d'objet est transmis à l'installation de guidage d'armes (WA) qui est mise en position pour introduire des contre-réactions.

10. Procédé selon l'une des revendications précédentes, en ce que le récepteur avertisseur par laser et processeur de signaux (LWESP) comprend des moyens pour la réception, pour l'exploitation et pour l'analyse des signaux lasers reçus et pour la classification par rapport à une banque de données.

11. Procédé selon l'une des revendications précédentes, **caractérisé en ce que**, du fait des conditions de réception du récepteur avertisseur par laser et processeur de signaux (LWESP), les dégradations des résultats émises sont émises au moins sous forme d'un télégramme de données comme avertissement par laser.

12. Procédé selon l'une des revendications précédentes, **caractérisé en ce que** l'exploitation et l'analyse des signaux et la classification par rapport à une banque de données se font par l'intermédiaire de l'installation de guidage d'armes (WA).

13. Procédé selon l'une des revendications précédentes, **caractérisé en ce que** des contre-réactions manuelles et/ou automatiques sont introduits par l'intermédiaire de l'installation de guidage d'armes (WA) à l'aide d'un système par laser actif embarqué et/ou de corps de défense anti-torpilles d'un Torpedo Counter Measure System (TCMS).

14. Procédé selon l'une des revendications précédentes, **caractérisé en ce que** les moyens (L) balaient l'espace environnant du véhicule (UB) par rapport aux objets à détecter en mode Scan.

15. Procédé selon l'une des revendications précédentes, **caractérisé en ce qu'**un transfert des télégrammes de données avertissement par laser / alarme par laser se fait entre le récepteur avertisseur par laser et processeur de signaux (LWESP) et le processeur de commande par laser (LCP).
